# EUROPEAN PATENT SPECIFICATION

(11) **EP 1 303 457 B1**
(45) Date of publication and mention of the grant of the patent: **20.08.2008**
(21) Application number: 01951735.8
(22) Date of filing: 26.06.2001
(51) Int. Cl.: B66F 9/12, B66F 9/19, B65G 67/04

(54) **METHOD AND APPARATUS FOR LOADING AND/OR UNLOADING A CONTAINER**
VERFAHREN UND VORRICHTUNG ZUM LADEN UND/ODER ENTLADEN VON EINEM CONTAINER
PROCEDE ET APPAREIL POUR CHARGER ET DECHARGER UN CONTENEUR

(30) Priority: 24.07.2000 FI 20001706
(43) Date of publication of application: 23.04.2003
(73) Proprietor: Sulameri, Esa, 28840 Pori (FI)
(72) Inventor: Sulameri, Esa, 28840 Pori (FI)
(74) Representative: Simmelvuo, Markku Kalevi
(86) International application number: PCT/FI2001/000607
(87) International publication number: WO 2002/008113

(56) References cited:
- WO-A1-95/23105
- DE-A1- 3 246 347
- FR-A1- 2 394 479
- US-A- 4 355 940
- US-A- 5 054 987

## Description

The invention relates to a method for loading and/or unloading a container, whereby a bundle of goods or several of the same is/are moved at a time into a container or out from the same by.a means of transport operating by auxiliary power, such as by a fork-lift loader, truck or like, whereby the container is particularly being loaded by the means of transport with an auxiliary device that is in connection with the above in a way transmitting power, with which a bundle of goods, being placed on top of a support surface existing in the auxiliary device, is being pushed into the container. Thereafter the auxiliary device is being pulled off from under the bundle of goods furthered by means for movement belonging to the same and on the other hand by means of a glide assembly, such as a roller way, belt conveyor and/or like that is arranged in the support surface of the same.

The procedure described above corresponds to a traditional way for loading or unloading a container, wherein usually a so called fork truck is being used. In this connection, when particularly a bundle of wood products is being packed into the container, there is an interest to get the container packed as full as possible. This is why the size of the bundles of wood products is usually dimensioned so, that they fit in the container as "cramped" as possible. In this case they are first of all lifted by the fork truck at the opening of the container, whereafter they are being pushed furthermore along the bottom of the container in the rear of the container. Thereafter a following bundle of wood products is being pushed after the preceding one and so on, until the container is full.

Such a disadvantage is involved in this type of loading, that particularly those wood products placed at the bottom of each bundle of wood products get damaged badly, when the bundle of wood products is being pushed along the bottom of the container. Correspondingly when the bundles of wood products are being unloaded from the container, they must be pulled out from the container again along the bottom of the container, in connection with which usually other kinds of damages are being caused to other points of the bundles as well to the wood substance depending on the point of pulling. The type of procedure described above is thus disadvantageous particularly due to a great waste caused by the same, but also due to the fact that it requires rather great use of power in order to move the bundles of wood products along the bottom of the container.

On the other hand particularly in US patents 4,355,940 and 5,054,987 there has been presented solutions, based on which it is previously known to exploit loading/unloading apparatuses operating by auxiliary power, whereby it is typical for the both of the above that in connection with a loading stage there is arranged a stationary roller conveyor, the rollers of which are being rotated by an operating apparatus in a way that the bundles of goods or the like placed on the rollers may be transferred inside the container placed after the roller conveyor.

One disadvantage regarding this type of solutions is that they first of all require stationary space arrangements with totally fixed mechanisms and loading stage structures. The type of apparatuses are furthermore very complicated which is why they require continuous service and maintenance so, that it is not advantageous to take advantage of the same in uncovered spaces. The type of apparatuses described above do not bring about any significant advantage when compared to traditional truck loading in such respect either, that the goods being brought at the opening of the container must be moved therefrom in the rear of the container by gliding the same along the bottom of the container. This is why the device solutions in question do not bring about any significant advantages particularly when trying to minimize the waste problems caused to the goods to be transported while loading/unloading of the same.

Furthermore the solutions presented in application documents DE 32 46 347 and DE 36 08 206 are particularly from the point of view of method techniques based on the fact that the container is being loaded by using an auxiliary device, by means of which the bundle of goods is being pushed inside the container by exploiting rollers that are placed underneath the auxiliary device. The above solutions are in practice applicable mostly for unloading a container in such a way that the auxiliary device is being removed from the container after the bundle of goods, being brought by the same, has been loaded. The above takes place in the former application in a way that the doors of the container are being closed and the auxiliary device is being pulled off from under the bundle of goods, which is furthered by a roller conveyor or like existing on the top surface of the auxiliary device. A corresponding procedure takes place in the latter solution by a conveyor mechanism for example based on belt-conveyor principle, that is integrally in the auxiliary device, by using of which the bundle of goods existing on top of the auxiliary device is made to move towards the back wall of the container and correspondingly the auxiliary device to move off from under the bundle of goods furthered by wheels existing beneath the same.

Neither one of the above solutions is adequately efficient not even for the above depicted loading of a container when keeping in mind the needs in practice, because first of all the height of each auxiliary device in both of the above solutions is disproportionately high, which reduces too much the effective internal space of the container particularly when keeping in mind those present requirements regarding packing efficiency. This causes also such a problem, when a bundle of goods is being lowered from the auxiliary device, that it falls down from too high, that is why the goods to be loaded suffers damages at least by its bottom part. This is why the solutions in question are not at all applicable e.g. for container transportation of wood products. On the other hand such a basic problem of container transportation is the solutions in question that unloading of the container is difficult to carry out, because the bundles of goods are being placed directly against the bottom of the container. Thus the unloading of the container must be carried out traditionally in this respect, the problematics related to which has been described above already.

In principle it is naturally possible to exploit both of the above solutions also in a way that the auxiliary device is being left stationarily inside the container for the time of transportation, in which case the container may be unloaded by the auxiliary device. In this kind of solution first of all such a problem is involved that the effective internal space of the container gets too small. Furthermore a crucial disadvantage may, however, be that, when applying this kind of procedure, there must be used auxiliary devices stationarily per each container, that is why acquisition and maintenance of such an arrangement gets disproportionately high. In this connection the only advantage is thus the fact that unloading of the container may be carried out by means of the auxiliary device.

The aim of the method according to the present invention is to achieve a decisive improvement in the problems described above and thus to raise essentially the level of prior art.

In order to carry out this aim, the method according to the invention is primarily characterized in that in connection with the auxiliary device, such as essentially at the front edge of its frame, is arranged a platform assembly, such as a strip of wood or like, that is attached to the same removably and by means of which the bundle of goods is being left, while loading of the same into the container, at least by its end facing the exhaust opening of the container on the platform assembly in such a position that the same is essentially raised from the ground, particularly in order to enable unloading of the container by bringing the auxiliary device with the means for transport under the bundle of goods and thereafter by pulling the bundle of goods, existing on top of the auxiliary device, out from the container.

As the most important advantages of the method according to the invention may be mentioned the simplicity and efficiency of the same and of those structures applicable for the same, whereby first of all an optimum packing density of the container is made possible by a significantly lower usage of power and on the other hand the damages of the goods to be transported as well as naturally of the bottom of the container are being minimized during loading and/or unloading. This is due to the fact that, when applying the method according to the invention, each bundle of goods is first of all moved into the container or out from the same furthered by the means for movement, such as wheels or like, existing in the auxiliary device placed under the same, whereby there is no need to "drag" the bundle of goods along the bottom. In this connection the support surface of the auxiliary device is as a further advantageous embodiment provided with a glide assembly, such as a roller way or like, by means of which the auxiliary device may first of all be pulled with as little friction as possible from under the bundle of goods that has been pushed into the container and, correspondingly during an unloading situation, furthermore to be pushed under the bundle of goods to be removed, in order to remove the bundle of goods from the container thereafter, when the glide assembly has been made passive, by pulling the auxiliary device with a fork truck. The method is particularly suitable to be used, when the length of the bundles of goods is bigger than the free inner width of the container. Thanks to the method according to the invention, it is thus possible to make the loading and unloading of container transportation much more efficient and easier first of all by maximizing the usage of the internal space of the container and on the other hand by minimizing waste caused by handling damages.

Advantageous embodiments of the method according to the invention have been represented in the dependent claims related to the same.

The invention relates also to an apparatus and for a corresponding purpose and operating according to the method.

The apparatus according to the invention has been described in greater detail in the preamble of the independent claim related to the same. The mainly characteristic features of the apparatus according to the invention have been described in the characterizing part of the corresponding claim.

As the most important advantages of the apparatus according to the invention may be mentioned the simplicity and efficiency of its construction and use. The apparatus enables loading of a container with as little power as possible and extremely efficiently in a way that the packing density of the container may be optimized while the waste caused by transportation damages is, however, being minimized. The apparatus according to the invention discloses an auxiliary device that is to be connected by coupling means in a power transmitting manner e.g. to a fork truck, which has means for movement, such as wheels, in order to move the bundle of goods, existing on top of the support surface of the auxiliary device, by the fork truck along the ground, whereby the damages caused by mechanical wearing of the goods to be treated and of the bottom of the container can be avoided. As an advantageous embodiment there has been arranged a platform assembly removably at the front end of the auxiliary device so, that the platform assembly is being left under the front edge of the bundle of goods, when the same is being loaded into the container. In this case during an unloading situation the auxiliary device, being equipped with a suitable nose, may be furthermore pushed by means of a fork truck under the edge, being raised, and thereafter totally under the bundle of goods in order to pull the same out of the container. One crucial advantage of the apparatus according to the invention is furthermore the fact, that it does not require certain kinds of stationary conveyor or loading stage structures, but instead thanks to the same it is possible to load even several containers simultaneously in totally open spaces.

Advantageous embodiments of the apparatus according to the invention have been represented in the dependent claims related to the same.

In the following description the invention is being illustrated in greater detail with reference to the appended drawings, in which
- Fig. 1: there has been shown an advantageous operating principle of the method according to the invention when loading a container,
- Fig. 2: there has been shown furthermore the corresponding advantageous embodiment, when the container is being unloaded,
- Figs 3a and 3b: there has been shown an advantageous auxiliary device according to the invention, which is meant particularly for a loading situation, as seen from above and as a side view, and
- Figs 4a and 4b: there has been shown an advantageous auxiliary device according to the invention, which is meant particularly for an unloading situation, as seen from above and as a side view.

The invention relates to a method for loading and/or unloading a container, whereby a bundle of goods t or several of the same is/are moved at a time into a container k or out from the same by a means of transport 1 operating by auxiliary power, such as by a fork-lift loader, truck or like, whereby the container k is particularly being loaded by the means of transport 1 with an auxiliary device 2 that is in connection with the above in a way transmitting power, with which a bundle of goods t, being placed on top of a support surface 2b existing in the auxiliary device, is being pushed into the container. Thereafter the auxiliary device 2 is being pulled off from under the bundle of goods furthered by means for movement 2c belonging to the same and on the other hand by means of a glide assembly 2d, such as a roller way, belt conveyor and/or like that is arranged in the support surface 2b of the same. In connection with the auxiliary device 2, such as essentially at the front edge of its frame 2a, is arranged a platform assembly 3, such as a strip of wood 3a or like, that is attached to the same removably and by means of which the bundle of goods t is being left, while loading of the same into the container k, at least by its end facing the exhaust opening of the container on the platform assembly 3 in such a position that the same is essentially raised from the ground, particularly in order to enable unloading of the container k by bringing the auxiliary device 2 with the means for transport 1 under the bundle of goods t and thereafter by pulling the bundle of goods t, existing on top of the auxiliary device 2, out from the container k.

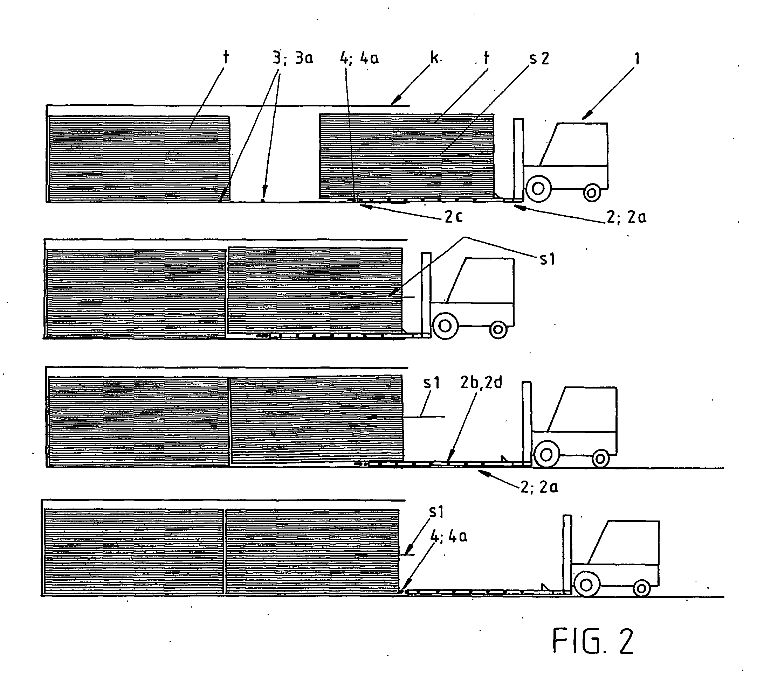

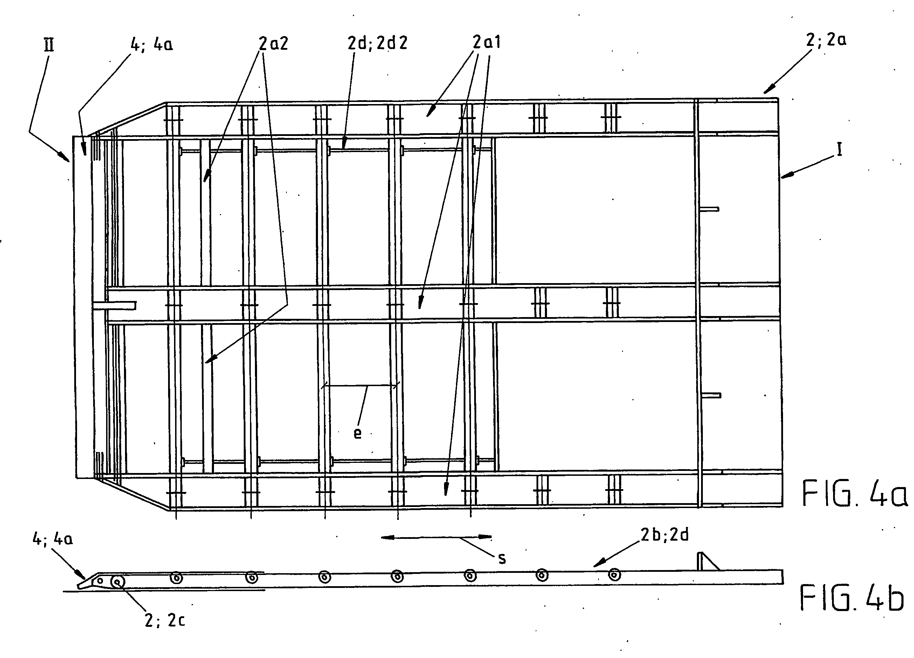

As a further advantageous embodiment of the method, in connection with the auxiliary device 2, such as essentially at the front edge of its frame 2a, has been arranged as shown particularly in Figures 2 and 4a and 4b a guidance assembly 4, such as a wedge-like buffer plate 4a or like, by means of which the auxiliary device 2 is, as shown in the lowermost views in Figure 2, being guided, when the container k is being unloaded, under the edge of the bundle of goods t existing therewith on the platform assembly 3, in order to bring the bundle of goods thereafter on tpo of the support surface 2b of the auxiliary device by pushing the auxiliary device 2 in a direction s1 in the longitudinal direction of the container according to the two views in the middle in Fig. 2, whereafter, when the glide assembly 2d of the auxiliary device is made passive by making it immobile by braking, by means of a locking assembly, by lowering the same underneath the support surface 2b and/or accordingly, the bundle of goods in question is removed from the container according to the uppermost view in figure 2 by pulling the same to an opposite direction s2 by the means of transport 1.

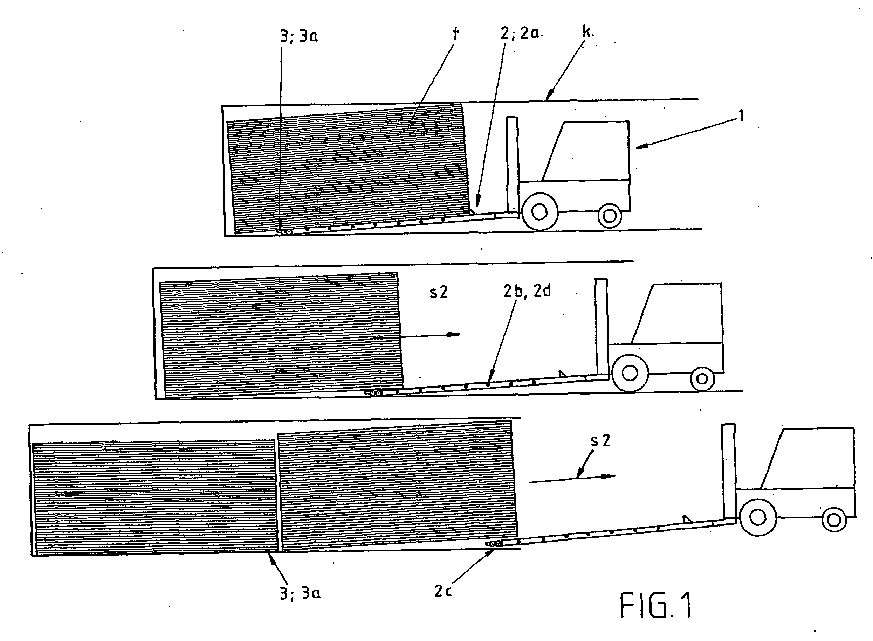

The method according to claim 1 or 2 is advantageously being exploited particularly for loading and/or unloading of a bundle of wood products to the container/out from the container k, wherein according to Figure 1 at least two bundles of wood products t, to be placed one after the other in the longitudinal direction s and the width of which corresponds essentially to the free inner width of the container and the height essentially to the free inner height of the container, are being loaded into the container k, whereby the total width W of the frame 2a of the auxiliary device is between 2100 - 2300 mm, advantageously 2150 mm, its length L between 2000 - 6500 mm, advantageously 3750 mm, and its height H between 80 - 120 mm, advantageously 100 mm.

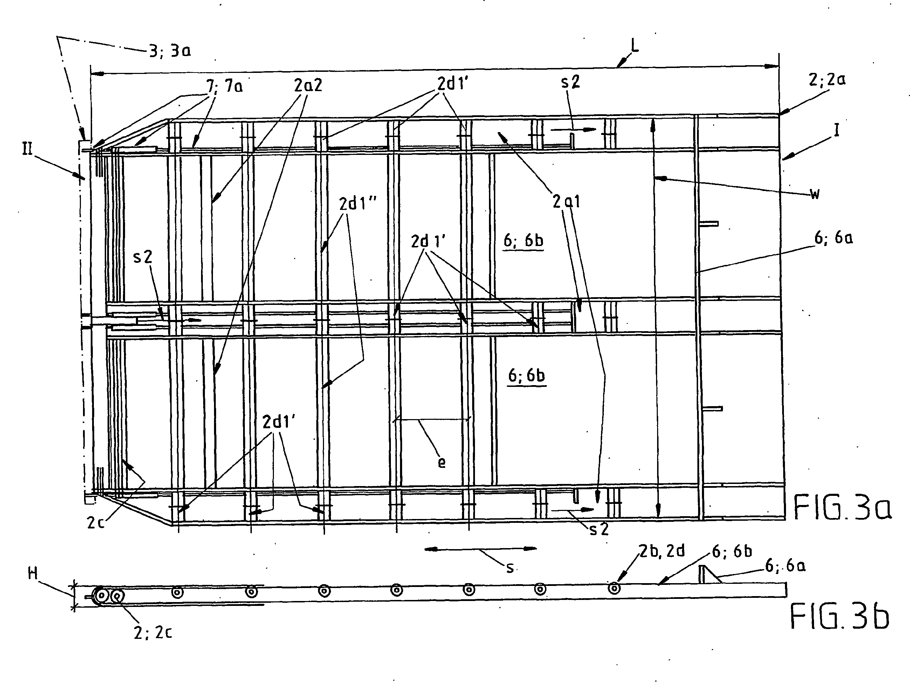

The invention relates thus to an apparatus for a corresponding purpose, that is meant to move a bundle of goods t or several of the same at a time into a container k or out from the same by a means of transport 1 operating by auxiliary power, such as by a fork-lift loader, truck or like. With reference particularly to those more detailed views in Figures 3 and 4, the apparatus includes an auxiliary device 2 that is to be connected to the means of transport 1 by coupling means 6 in a way transmitting power, and that has a support surface 2b in order to push the bundle of goods placed on top of the same inside the container k or to pull it out therefrom by moving the auxiliary device 2 along the ground.

In connection with the auxiliary device 2, such as essentially at the front edge of its frame 2a, there has been arranged a platform assembly 3, such as a strip of wood 3a or like, that is attached to the same removably by means of a fastening assembly 7, such as a spike arrangement 7a that is to be drawn inside the frame 2a in direction s2 as shown in Figure 3a, particularly in order to leave the bundle of goods t, while loading of the same into the container k, at least by its end facing the exhaust opening of the container on the platform assembly 3 in such a position that the same is essentially raised from the ground, when the auxiliary device 2 is being pulled off from under the same by the means of transport 1 and furthered by the glide assembly 2d, such as a roller way 2d1, belt conveyor and/or like that is arranged in the support surface 2d of the auxiliary device.

As an advantageous embodiment there has been arranged in connection with the auxiliary device 2, such as essentially at the front edge of its frame 2a, first of all a guidance assembly 4, such as a wedge-like buffer plate 4a or like, in order to guide the auxiliary device 2, when the container k is being unloaded, under the edge of the bundle of goods t existing therewith on the platform assembly 3, in order to bring the bundle of goods thereafter on top of the support surface 2b of the auxiliary device by pushing the auxiliary device 2 in a direction s1 in the longitudinal direction under the bundle of goods in question, and on the other hand means 2d2 for making the glide assembly 2d of the auxiliary device passive by making it immobile by braking, by means of a locking assembly, by lowering the same underneath the support surface 2b and/or accordingly, in order to remove the bundle of goods t in question from the container k by pulling the same to an opposite direction s2 by the means of transport 1.

Particularly in order to load at least two bundles of wood products t, to be placed one after the other in the longitudinal direction s and the width of which corresponds essentially to the free inner width of the container and the height essentially to the free inner height of the container, into the container k on the principle shown e.g. in Fig. 1, the total width W of the frame 2a of the auxiliary device is as shown particularly in Figures 3a and 3b between 2100 - 2300 mm, advantageously 2150 mm, its length L between 2000 - 6500 mm, advantageously 3750 mm, and its height H between 80 - 120 mm, advantageously 100 mm.

Particularly in order to load into the container k bundles of wood products t, that are essentially narrower than the free inner width of the container, such as two bundles to be placed side by side in the width direction, the total width W of the frame 2a of the auxiliary device is between 900 - 1100 mm, advantageously 1000 mm, its length L between 2000 - 6500 mm, and its height H between 80 - 120 mm, advantageously 100 mm.

With reference to the structures shown particularly in Figures 3 and 4, the frame 2a of the auxiliary device is formed of at least two frame beams 2a1, such as U-bars or like, existing essentially in the longitudinal direction s and that are coupled with each other by a transverse support structure 2a2. Correspondingly the glide assembly 2d is arranged by several roller assemblies, which are placed at a distance e apart from each other in the longitudinal direction s and that have been connected to the frame beams 2a1 by bearings, e.g. by short rollers at the point of the frame beams and longer rollers 2d1', 2d1" existing in between the above. Furthermore the means for movement 2c are arranged correspondingly by rollers or like that are connected to the free end II of the frame 2a of the auxiliary device with bearings, and the coupling means 6 is arranged by a base and binding plate 6a, placed in a transverse position at the first end I of the frame, and by a deck plate 6b, placed in connection with the above, for the fork teeth of the means for transport 1, or correspondingly.

It is obvious, that the invention is not limited to the embodiments shown or described above, but instead it can be modified within the basic idea as needed. It is thus first of all clear that, when constructing auxiliar devices of the type described above that are essentially narrower than the free width of the container, the structure may be carried out e.g. with a two-piece frame beam structure etc. It is furthermore naturally clear, that instead of the type of roller solutions being described above, it is possible to use more non-uniform roller solutions or on the other hand e.g. wheels filled with air, belt conveyors etc. as the means for movement as well as in connection with the glide assembly. It is naturally clear, that the type of auxiliary device described above may be equipped with suitable coupling means in order to be used for other type of means for transport in a way that the means for movement are required at both ends and possibly also in the middle part of the auxiliary device. It is naturally clear, that the structures described above as well as dimensions of the same may be varied according to each circumstance and purpose in a way, that the corresponding method and apparatus may be used for loading and/or charging of other type of transportation spaces, such as for trailer loading etc.

## Claims

1. Method for loading and/or unloading a container, comprising the steps of
moving a bundle of goods (t) or several of the same at a time into a container (k) or out from the same by a means of transport (1) operating by auxiliary power;
loading the container (k) by the means of transport (1) with an auxiliary device (2) that is in connection with the above in a way transmitting power, with which a bundle of goods (t), being placed on top of a support surface (2b) existing in the auxiliary device;
pushing said auxiliary device into the container;
pulling of said auxiliary device (2) under the bundle of goods furthered by means for movement (2c) belonging to the same and on the other hand by means of a glide assembly (2d),
**characterized by**
removably attaching a platform assembly (3) to the auxiliary device;
leaving said bundle of goods while loading of the same into the container (k), at least by its end facing the exhaust opening of the container on the platform assembly (3) in such a position that the same is raised from the ground in order to enable unloading of the container (k) by bringing the auxiliary device (2) with the means for transport (1) under the bundle of goods (t) and thereafter by pulling the bundle of goods (t), existing on top of the auxiliary device (2), out from the container (k).

2. Method according to claim 1, **characterized in that** in connection with the auxiliary device (2), has been arranged a guidance assembly (4) by means of which the auxiliary device (2) is being guided, when the container (k) is being unloaded, under the edge of the bundle of goods (t) existing therewith on the platform assembly (3) in order to bring the bundle of goods thereafter on top of the support surface (2b) of the auxiliary device by pushing the auxiliary device (2) in a direction(sl) in the longitudinal direction of the container, whereafter, when the glide assembly (2d) of the auxiliary device is made passive by making it immobile by braking, by means of a locking assembly, by lowering the same underneath the support surface (2b) and/or accordingly, the bundle of goods in question is removed from the container by pulling the same to an opposite direction (s2) by the means of transport (1).

3. Method according to claim 1 or 2, which is being exploited particularly for loading and/or unloading of a bundle of wood products to the container/out from the container (k), **characterized in that** at least two bundles of wood products (t), to be placed one after the other in the longitudinal direction (s) and the width of which corresponds essentially to the free inner width of the container and the height essentially to the free inner height of the container, are being loaded into the container (k), whereby the total width (W) of the frame (2a) of the auxiliary device is between 2100-2300 mm, its length (L) between 2000-6500 mm, and its height (H) between 80-120 mm.

4. Apparatus for loading and/or unloading a container in order to move a bundle of goods (t) or several of the same at a time into a container (k) or out from the same by a means of transport (1) operating by auxiliary power, whereby the apparatus includes an auxiliary device (2) that is to be connected to the means of transport (1) by coupling means (6) in a way transmitting power, and that has a support surface (2b) equipped with a glide assembly (2d) in order to push the bundle of goods placed on top of the support surface inside the container (k) or to pull it out there from furthered by means for movement (2c) belonging to the same by moving the auxiliary device (2) along the ground,
**characterized in that**
in connection with the auxiliary device (2) is arranged a platform assembly (3) that is removably attached to the same by means of a fastening assembly (7) in order to leave the bundle of goods (t), while loading of the same into the container (k), at least by its end facing the exhaust opening of the container on the platform assembly (3) in such a position that the same is essentially raised from the ground, when the auxiliary device (2) is being drawn off from under the same.

5. Apparatus according to claim 4, **characterized in that** in connection with the auxiliary device (2), such as essentially at the front edge of its frame (2a), has been arranged a guidance assembly (4), such as a wedge-like buffer plate (4a) or like, in order to guide the auxiliary device (2), when the container (k) is being unloaded, under the edge of the bundle of goods (t) existing therewith on the platform assembly (3), in order to bring the bundle of goods thereafter on top of the support surface (2b) of the auxiliary device by pushing the auxiliary device(2)in a direction(sl) in the longitudinal direction of the container, and on the other hand means (2d2) for making the glide assembly (2d) of the auxiliary device passive by making it immobile by braking, by means of a locking assembly, by lowering the same underneath the support surface (2b) and/or accordingly, in order to remove the bundle of goods in question from the container by pulling the same to an opposite direction (s2) by the means of transport (1) .

6. Apparatus according to claim 4 or 5, which is meant particularly for loading and/or unloading of a bundle of wood products to the container/out from the container (k), **characterized in that** in order to load into the container (k) at least two bundles of wood products (t), to be placed one after the other in the longitudinal direction (s) and the width of which corresponds essentially to the free inner width of the container and the height essentially to the free inner height of the container, the total width (W) of the frame (2a) of the auxiliary device is between 2100-2300 mm, its length (L) between 2000-6500 mm and its height (H) between 80-120 mm.

7. Apparatus according to claim 4 or 5, which is meant particularly for loading and/or unloading of a bundle of wood products to the container/out from the container (k), **characterized in that** particularly in order to load into the container (k) bundles of wood products (t), that are essentially narrower than the free inner width of the container, such as two bundles to be placed side by side in the width direction, the total width (W) of the frame (2a) of the auxiliary device is between 900-1100 mm, its length (L) between 2000-6500 mm, and its height(H) between 80-120 mm.

8. Apparatus according to any of the claims 4-7 above, **characterized in that** the frame (2a) of the auxiliary device is formed of at least two frame beams (2a1), such as U-bars or like, existing essentially in the longitudinal direction (s) and that are coupled with each other by a transverse support structure (2a2), whereby the glide assembly (2d) is arranged by several roller assemblies (2dl', 2dl") or like that are placed at a distance (e) apart from each other in the longitudinal direction (s) and that have been connected to the frame beams (2a1) by bearings, whereby the means for movement (2c) are arranged correspondingly by rollers or like that are connected to the free end (II) of the frame (2a) of the auxiliary device with bearings, and the coupling means (6) is arranged by a base and binding plate (6a), placed in a transverse position at the first end (I) of the frame, and by a deck plate (6b), placed in connection with the above, for the fork teeth of the means for transport (1), or correspondingly.

## Patentansprüche

1. Verfahren zum Beladen und/oder Entladen eines Behälters, welches die Schritte aufweist:
Bewegen eines Bündels von Gütern (t) oder mehrerer derselben gleichzeitig in einen Behälter (k) oder aus diesem heraus durch ein Transportmittel (1), das durch Hilfsenergie betätigt wird;
Beladen des Behälters (k) durch das Transportmittel (1) mit einer Hilfsvorrichtung (2), die mit dem Vorgenannten in einer Energie übertragenden Weise verbunden ist, durch die ein Bündel von Gütern (t) auf einer in der Hilfsvorrichtung befindlichen Stützfläche (2b) angeordnet wird;
Schieben der Hilfsvorrichtung in den Behälter;
Ziehen der Hilfsvorrichtung (2) unter dem Bündel von Gütern, das weiterbewegt wurde durch zu dieser gehörende Bewegungsmittel (2c) und andererseits durch eine Gleitanordnung (2d);
**gekennzeichnet durch**
abnehmbares Anbringen einer Plattformanordnung (3) an der Hilfsvorrichtung;
Lassen des Bündels von Gütern, während dasselbe in den Behälter (k) geladen wird, zumindest **durch** sein der Ausgabeöffnung des Behälters zugewandtes Ende auf der Plattformanordnung (3) in einer solchen Position, dass dasselbe von dem Boden abgehoben wird, um das Entladen des Behälters (k) zu ermöglichen, indem die Hilfsvorrichtung (2) mit dem Transportmittel (1) unter das Bündel von Gütern (t) gebracht wird und danach das Bündel von Gütern (t), das sich auf der Hilfsvorrichtung (2) befindet, aus dem Behälter (k) herausgezogen wird.

2. Verfahren nach Anspruch 1, **dadurch gekennzeichnet, dass** in Verbindung mit der Hilfsvorrichtung (2) eine Führungsanordnung (4), durch die die Hilfsvorrichtung (2) geführt wird, wenn der Behälter (k) entladen wird, unter der Kante des Bündels von Gütern (t), sich hiermit auf der Plattformanordnung (3) befindend, angeordnet wurde, um das Bündel von Gütern danach auf die Stützfläche (2b) der Hilfsvorrichtung zu bringen, indem die Hilfsvorrichtung (2) in einer Richtung (s1) in der Längsrichtung des Behälters geschoben wird, wonach, wenn die Gleitanordnung (2d) der Hilfsvorrichtung unwirksam gemacht ist, indem sie unbewegbar gemacht wird durch Bremsen, durch eine Verriegelungsanordnung, durch Absenken derselben unter die Stützfläche (2b) und/oder dergleichen Mittel, das fragliche Bündel von Gütern aus dem Behälter entfernt wird durch Ziehen desselben in einer entgegengesetzten Richtung (s2) durch das Transportmittel (1).

3. Verfahren nach Anspruch 1 oder 2, welches insbesondere ausgenutzt wird zum Laden und/oder Entladen eines Bündels von Holzprodukten in den Behälter / aus dem Behälter (k), **dadurch gekennzeichnet, dass** zumindest zwei Bündel von Holzprodukten (t), die nacheinander in der Längsrichtung (s) anzuordnen sind und deren Breite im Wesentlichen der freien inneren Breite des Behälters und die Höhe im Wesentlichen der freien inneren Höhe des Behälters entsprechen, in den Behälter (k) geladen werden, wodurch die Gesamtbreite (W) des Rahmens (2a) der Hilfsvorrichtung zwischen 2100 - 2300 mm, seine Länge (L) zwischen 2000 - 6500 mm und seine Höhe (H) zwischen 80 - 120 mm betragen.

4. Vorrichtung zum Beladen und/oder Entladen eines Behälters, um ein Bündel von Gütern (t) oder mehrere derselben gleichzeitig in einen Behälter (k) oder aus demselben durch ein durch Hilfsenergie betätigtes Transportmittel (1) zu bewegen, wobei die Vorrichtung eine Hilfsvorrichtung (2) enthält, die mit dem Transportmittel (1) durch ein Kopplungsmittel (6) in einer Energie übertragenden Weise zu verbinden ist und die eine Stützfläche (2b) hat, die mit einer Gleitanordnung (2d) versehen ist, um das Bündel von Gütern, das sich auf der Stützfläche befindet, in den Behälter (k) zu schieben oder es aus diesem herauszuziehen, weiterbewegt durch ein Bewegungsmittel (2c), das zu derselben gehört, durch Bewegen der Hilfsvorrichtung (2) entlang des Bodens,
**dadurch gekennzeichnet, dass**
in Verbindung mit der Hilfsvorrichtung (2) eine Plattformanordnung (3) angeordnet ist, die abnehmbar an derselben durch eine Befestigungsanordnung (7) angebracht ist, um das Bündel von Gütern (t), während dasselbe in den Behälter (k) geladen wird, zumindest durch sein der Ausgabeöffnung des Behälters zugewandtes Ende auf der Plattformanordnung (3) in einer derartigen Position zu lassen, dass dasselbe wesentlich von dem Boden abgehoben wird, wenn die Hilfsvorrichtung (2) von unterhalb desselben herausgezogen wird.

5. Vorrichtung nach Anspruch 4, **dadurch gekennzeichnet, dass** in Verbindung mit der Hilfsvorrichtung (2), wie wesentlich an der Vorderkante ihres Rahmens (2a), eine Führungsanordnung (4), wie eine keilartige Pufferplatte (4a) oder dergleichen, um die Hilfsvorrichtung (2) zu führen, wenn der Behälter (k) entladen wird, unter der Kante des Bündels von Gütern (t), das sich hiermit auf der Plattformanordnung (3) befindet, angeordnet wurde, um das Bündel von Gütern danach auf die Stützfläche (2b) der Hilfsvorrichtung zu bringen, indem die Hilfsvorrichtung (2) in einer Richtung (s1) in der Längsrichtung des Behälters geschoben wird, und andererseits ein Mittel (2d2), um die Gleitanordnung (2d) der Hilfsvorrichtung unwirksam zu machen, indem sie durch Bremsen, mittels einer Verriegelungsanordnung, durch Absenken derselben unter die Stützfläche (2b) und/oder entsprechende Mittel unbeweglich gemacht wird, um das fragliche Bündel von Gütern aus dem Behälter zu entfernen, durch Ziehen desselben in einer entgegengesetzten Richtung (s2) durch das Transportmittel (1).

6. Vorrichtung nach Anspruch 4 oder 5, die insbesondere gemeint ist zum Laden und/oder Entladen eines Bündels von Holzprodukten in den Behälter / aus dem Behälter (k), **dadurch gekennzeichnet, dass**, um zumindest zwei Bündel von Holzprodukten (t) in den Behälter (k) zu laden, die nacheinander in der Längsrichtung (s) anzuordnen sind und deren Breite im Wesentlichen der freien inneren Breite des Behälters und die Höhe im Wesentlichen der freien inneren Höhe des Behälters entsprechen, die Gesamtbreite (W) des Rahmens (2a) der Hilfsvorrichtung zwischen 2100 - 2300 mm, seine Länge (L) zwischen 2000 - 6500 mm und seine Höhe (H) zwischen 80 - 120 mm betragen.

7. Vorrichtung nach Anspruch 4 oder 5, die insbesondere zum Laden und/oder Entladen eines Bündels von Holzprodukten in den Behälter / aus dem Behälter (k) gemeint ist, **dadurch gekennzeichnet, dass**, insbesondere um Bündel von Holzprodukten (t) in den Behälter (k) zu laden, die wesentlich schmaler als die freie innere Breite des Behälters sind, zum Beispiel zwei Bündel Seite an Seite in der Breitenrichtung anzuordnen sind, wobei die Gesamtbreite (W) des Rahmens (2a) der Hilfsvorrichtung zwischen 900 - 1100 mm, seine Länge (L) zwischen 2000 - 6500 mm und seine Höhe (H) zwischen 80 - 120 mm betragen.

8. Vorrichtung nach einem der vorstehenden Ansprüche 4 bis 7, **dadurch gekennzeichnet, dass** der Rahmen (2a) der Hilfsvorrichtung aus zumindest zwei Rahmenbalken (2a1), wie U-Trägern oder dergleichen, gebildet ist, die im Wesentlichen in der Längsrichtung (s) angeordnet sind und die durch eine Querstützstruktur (2a2) miteinander gekoppelt sind, wobei die Gleitanordnung (2d) durch mehrere Rollenanordnungen (2d1', 2d1'') oder dergleichen gebildet ist, die in einem gegenseitigen Abstand (e) in der Längsrichtung (s) angeordnet sind und die mit den Rahmenbalken (2a1) durch Lager verbunden wurden, wobei die Bewegungsmittel (2c) entsprechend durch Rollen oder dergleichen ausgebildet sind, die mit dem freien Ende (II) des Rahmens (2a) der Hilfsvorrichtung mit Lagern verbunden sind, und das Kupplungsmittel (6) durch eine Basis und eine Bindeplatte (6a), angeordnet in einer Querposition an dem ersten Ende (I) des Rahmens, und durch eine Deckplatte (6b), angeordnet in Verbindung mit dem Vorstehenden, ausgebildet ist, für die Gabelzähne des Transportmittels (1) oder entsprechend.

## Revendications

1. Procédé pour charger et/ou décharger un conteneur, comprenant les étapes de:
déplacer une liasse de produits (t) ou plusieurs de celles-ci à la fois dans un conteneur (k) ou la ou les sortir hors de celui-ci par un moyen de transport fonctionnant en utilisant une énergie auxiliaire,
charger le conteneur (k) par le moyen de transport (1) avec un dispositif auxiliaire (2) qui est relié avec celui indiqué ci-dessus, de manière à transmettre l'énergie, avec lequel une liasse de produits (t) est placée en partie supérieure d'une surface support (2b) existant dans le dispositif auxiliaire ;
pousser le dispositif auxiliaire à l'intérieur du conteneur ;
tirer le dispositif auxiliaire (2) sous la liasse de produits déplacée par le moyen de déplacement (2c) appartenant au même et, d'autre part, à l'aide d'un ensemble de glissement (2d),
**caractérisé par** :
la fixation amovible d'un ensemble de plate-forme (3) sur le dispositif auxiliaire,
laisser ladite liasse de produits tout en chargeant celle-ci dans le conteneur (k), au moins par son extrémité tournée vers l'ouverture d'évacuation du conteneur de l'ensemble de plate-forme (3), en une position telle que celle-ci soit levée du sol pour permettre le déchargement du conteneur (k), en plaçant le dispositif auxiliaire (2) avec le moyen de transport (1) sous la liasse de produits (t) et, ensuite, en tirant la liasse de produits (t), existant en partie supérieure du dispositif auxiliaire (2), hors du conteneur (k).

2. Procédé selon la revendication 1, **caractérisé en ce que**, dans la liaison au dispositif auxiliaire (2), a été agencé un ensemble de guidage (4), au moyen duquel le dispositif auxiliaire (2) est guidé, lorsque le conteneur (k) est en déchargement, sous le bord de la liasse de produits (t) existant avec lui sur l'ensemble de plate-forme (3) afin de placer la liasse de produits ensuite en partie supérieure de la surface support (2b) du dispositif auxiliaire en poussant le dispositif auxiliaire (2) dans une direction (s1) orientée dans la direction longitudinale du conteneur, à la suite de quoi, lorsque l'ensemble de glissement (2d) du dispositif auxiliaire est rendu passif en le rendant immobile en pratiquant un freinage au moyen d'un ensemble de verrouillage, par abaissement de celui-ci au-dessous de la surface support (2b) et/ou de manière correspondante, la liasse de produits en question est enlevée du conteneur en tirant celle-ci dans un sens (s2) opposé, en utilisant le moyen de transport (1).

3. Procédé selon la revendication 1 ou 2, mis en oeuvre particulièrement pour charger et/ou décharger une liasse de produits en bois au conteneur/hors du conteneur (k), **caractérisé en ce qu'**au moins deux liasses de produits en bois (t), devant être placées l'une après l'autre dans la direction longitudinale (s) et dont la largeur correspond sensiblement à la largeur intérieure libre du conteneur et dont la hauteur correspond sensiblement à la hauteur intérieure libre du conteneur, sont chargées dans le conteneur (k) de manière que la largeur (W) totale du cadre (2a) du dispositif auxiliaire soit comprise dans la fourchette entre 2100 et 2300 mm, que sa longueur (L) soit comprise dans la fourchette entre 2000 et 6500 mm, et que sa hauteur (H) soit comprise dans la fourchette entre 80 et 120 mm.

4. Dispositif pour charger et/ou décharger un conteneur pour déplacer une liasse de produits (t) ou plusieurs de celles-ci à la fois dans un conteneur (k) ou en dehors de celui-ci à l'aide d'un moyen de transport (1) fonctionnant à l'aide d'une énergie auxiliaire, de manière que le dispositif comprenne un dispositif auxiliaire (2) devant être connecté au moyen de transport (1) par des moyens de couplage (6) de manière à transmettre de l'énergie, et qu'il dispose d'une surface support (2b) équipée d'un ensemble de glissement (2d) pour pousser la liasse de produits placée en partie supérieure de la surface support à l'intérieur du conteneur (k), ou pour la tirer hors de celui-ci, en utilisant un dispositif de déplacement (2c) appartenant à celui-ci, en déplaçant le dispositif auxiliaire (2) le long du sol,
**caractérisé en ce que**,
en liaison avec le dispositif auxiliaire (2), est agencé un ensemble de plate-forme (3) qui est fixé de façon amovible à celui-ci à l'aide d'un ensemble de fixation (7) pour, tout en chargeant celle-ci dans le conteneur (k) au moins par son extrémité tournée face à l'ouverture d'évacuation du conteneur sur l'ensemble de plate-forme (3), laisser la liasse de produits (t) en une position telle que cellle-ci soit essentiellement soulevée du sol lorsque le dispositif auxiliaire (2) est extrait de celui-ci.

5. Dispositif selon la revendication 4, **caractérisé en ce que**, en liaison avec le dispositif auxiliaire (2) tel qu'essentiellement au bord avant de son cadre (2a), est agencé un ensemble de guidage (4) tel qu'une plaque tampon (4a) analogue à un coin ou similaire, de manière à guider le dispositif auxiliaire (2), lorsque le conteneur (k) est en déchargement, sous le bord de la liasse de produits (t) sortant avec lui sur l'ensemble de plate-forme (3), pour placer la liasse de produits ensuite en partie supérieure de la surface support (2b) du dispositif auxiliaire, en poussant le dispositif auxiliaire (2) dans une direction (s1), dans la direction longitudinale du conteneur et, d'autre part, des moyens (2d2) pour rendre l'ensemble de glissement (2d) du dispositif auxiliaire passif en le rendant immobile par l'effet d'un freinage, au moyen d'un ensemble de verrouillage, en abaissant celui-ci au-dessous de la surface support (2b) et/ou de manière correspondante pour enlever la liasse de produits en question du conteneur, en tirant celle-ci dans un sens (s2) opposé, par le moyen de transport (1).

6. Dispositif selon la revendication 4 ou 5, conçu en particulier pour le chargement et/ou le déchargement d'une liasse de produits en bois sur le conteneur/hors du conteneur (k), **caractérisé en ce que**, pour charger dans le conteneur (k) au moins deux liasses de produits en bois (t), devant être placées l'une après l'autre dans la direction longitudinale (s) et dont la largeur correspond sensiblement à la largeur intérieure libre du conteneur et la hauteur correspond sensiblement à la hauteur intérieure libre du conteneur, la largeur totale (W) du cadre (2a) du dispositif auxiliaire est comprise dans la fourchette entre 2100 et 2300 mm, sa longueur (L) est comprise dans la fourchette entre 2000 et 6500 mm et sa hauteur (H) est comprise dans la fourchette entre 80 et 120 mm.

7. Dispositif selon la revendication 4 ou 5, conçu en particulier pour le chargement et/ou le déchargement d'une liasse de produits en bois sur le conteneur/hors du conteneur (k), **caractérisé en ce que**, en particulier, afin de charger dans le conteneur (k) des liasses de produits en bois (t) qui sont sensiblement plus étroites que la largeur intérieure libre du conteneur, de manière que deux liasses puissent être placées côte-à-côte en direction de la largeur, la largeur totale (W) du cadre (2a) du dispositif auxiliaire est comprise dans la fourchette entre 2100 et 2300 mm, sa longueur (L) est comprise dans la fourchette entre 2000 et 6500 mm et sa hauteur (H) est comprise dans la fourchette entre 80 et 120 mm.

8. Dispositif selon l'une quelconque des revendications 4 à 7 ci-dessus, **caractérisé en ce que** le cadre (2a) du dispositif auxiliaire est formé d'au moins deux poutres de cadre (2a1), telles que des bords en U ou analogue, placées sensiblement dans la direction longitudinale (s) et couplées l'une à l'autre par une structure support transversale (2a2), de manière que l'ensemble de glissement (2d) soit agencé par une pluralité d'ensembles à galets (2d1', 2d1'') ou analogue, placés à une distance (e) les uns des autres dans la direction longitudinale (s) et ayant été connectés aux poutres de cadre (2a1) par des paliers, de manière que les moyens de déplacement (2c) soient agencés de manière correspondante par des galets ou analogues, qui sont connectés à l'extrémité libre (II) du cadre (2a) du dispositif auxiliaire avec des paliers, et les moyens de couplage (6) sont agencés par une base et une plaque d'attachement (6a) placées en une position transversale à la première extrémité (I) du cadre, et par une plaque de pont (6b), placée en liaison avec celle indiquée ci-dessus, pour les dents de fourche des moyens de transport (1), ou dans un but correspondant.
